# FASCICULE DE BREVET EUROPEEN

(11) **EP 2 563 670 B1**
(45) Date de publication et mention de la délivrance du brevet: **17.10.2018**
(21) Numéro de dépôt: 11731022.7
(22) Date de dépôt: 19.04.2011
(51) Int. Cl.: B64G 1/10, B64G 1/64

(54) **SATELLITE A STRUCTURE SIMPLIFIEE, ALLEGEE ET ECONOMIQUE, ET SON PROCEDE DE MISE EN OEUVRE**
SATELLIT MIT VEREINFACHTER STRUKTUR, GERINGEM GEWICHT UND KOSTENGÜNSTIG, UND DAS DAZUGEHÖRIGE ANWENDUNGSVERFAHREN
SATELLITE WITH SIMPLIFIED STRUCTURE, LIGHTWEIGHT AND ECONOMIC, AND ITS METHOD OF APPLICATION

(30) Priorité: 28.04.2010 FR 1053255
(43) Date de publication de la demande: 06.03.2013
(73) Titulaire: Airbus Defence and Space SAS, 31402 Toulouse Cedex 4 (FR)
(72) Inventeur: CHEYNET DE BEAUPRE, René, F-31320 Castanet-Tolosan (FR)
(74) Mandataire: Cabinet Plasseraud
(86) Numéro de dépôt international: PCT/FR2011/050899
(87) Numéro de publication internationale: WO 2011/135230

(56) Documents cités:
- FR-A1- 2 372 083
- GB-A- 2 270 666
- US-B1- 6 206 327

## Description

L'invention concerne le domaine technique des satellites artificiels, et plus spécifiquement de leurs structures.

La présente invention se rapporte d'une manière générale à un satellite, dont la structure comprend :
- un anneau circulaire d'interface lanceur, destiné à être solidarisé amoviblement à un anneau analogue solidaire d'un lanceur du satellite, et libéré de l'anneau solidaire du lanceur, lorsque le satellite est largué de ce dernier, en fin de phase propulsive du lanceur et,
- au moins deux murs plans porte-équipements, s'étendant sensiblement parallèlement à l'axe dudit anneau d'interface lanceur et reliés rigidement entre eux et audit anneau d'interface.

Dans cette structure, l'axe dudit anneau, comme pour tout anneau circulaire, doit être compris comme étant l'axe géométrique perpendiculaire au plan de l'anneau circulaire et passant par le centre dudit anneau circulaire.

Afin qu'un satellite soit compatible avec plusieurs lanceurs, il est connu que l'anneau d'interface lanceur, dont est équipé le satellite, ainsi que l'anneau solidaire du lanceur et auquel l'anneau d'interface lanceur du satellite est solidarisé amoviblement, pour le lancement, sont choisis d'un même diamètre préférentiellement parmi trois diamètres standards, qui sont respectivement de 937mm, 1194mm et 1666mm. Les structures de satellite, qui doivent être à la fois très légères (typiquement de 20 à 25% de la masse totale du satellite au lancement), et résister au lancement en supportant plusieurs g d'accélération statique (où g est l'accélération de la pesanteur terrestre), comprennent également, selon l'état de la technique, une structure support intermédiaire, supportant les murs plans porte-équipements et les reliant à l'anneau d'interface lanceur.

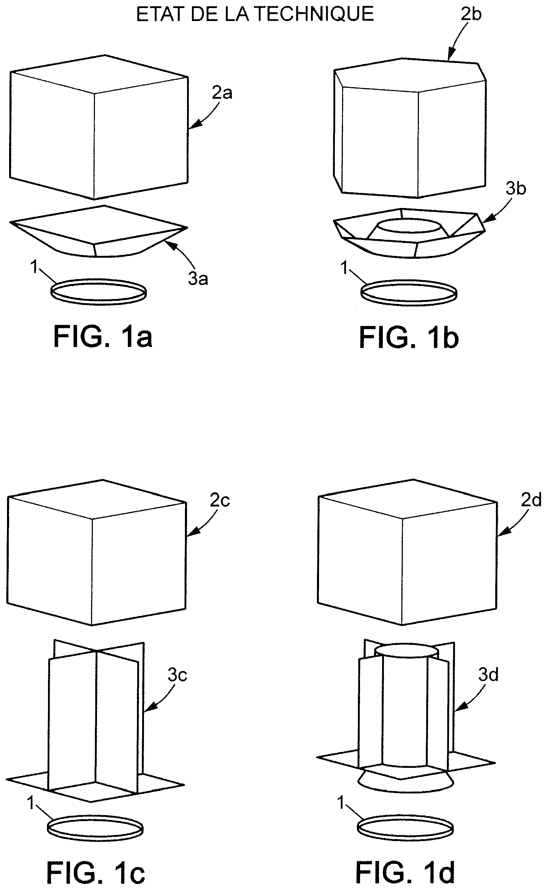

Cette structure support intermédiaire est une structure importante, qui, comme représentée sur la figure la annexée, peut être d'une seule pièce 3a, de forme générale tronconique ou assimilée, par exemple à section transversale (perpendiculaire à l'axe de l'anneau 1 d'interface lanceur) de forme évolutive, depuis une forme circulaire, au niveau de son raccordement audit anneau 1 d'interface lanceur, à une forme carrée ou rectangulaire, à son raccordement aux quatre murs porteurs formant une case à équipements cubique 2a ou parallélépipédique du satellite, ou encore une structure 3b en forme de cuvette (voir figure 1b), avec éventuellement une cheminée intérieure, et présentant des facettes, dont le nombre et la position correspondent à ceux des murs de façade d'une case 2b à équipements et/ou charge utile du satellite. En variante, et comme représenté sur les figures 1c et 1d, cette structure intermédiaire 3c ou 3d peut être constituée de plusieurs pièces assemblées et comprenant des panneaux et/ou au moins un cône et/ou au moins un cylindre, supportant une case 2c ou 2d.

Cette structure support intermédiaire reprend tous les efforts statiques au lancement et les transmet aux murs porte-équipements qui sont fixés sur cette structure.

En outre, le sous-ensemble de propulsion du satellite, qui constitue une partie très massique du satellite et représente jusqu'à la moitié de la masse totale du satellite au lancement, est en général lui aussi directement monté sur cette structure support intermédiaire.

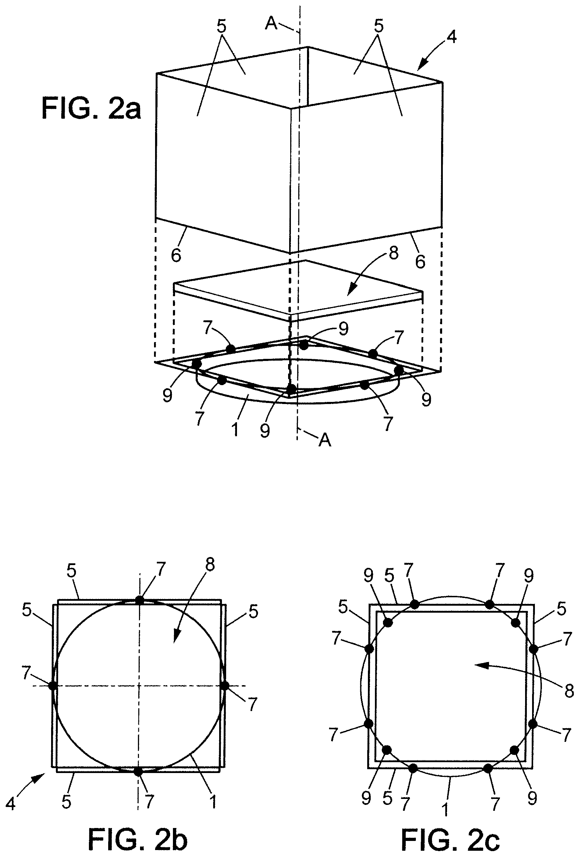

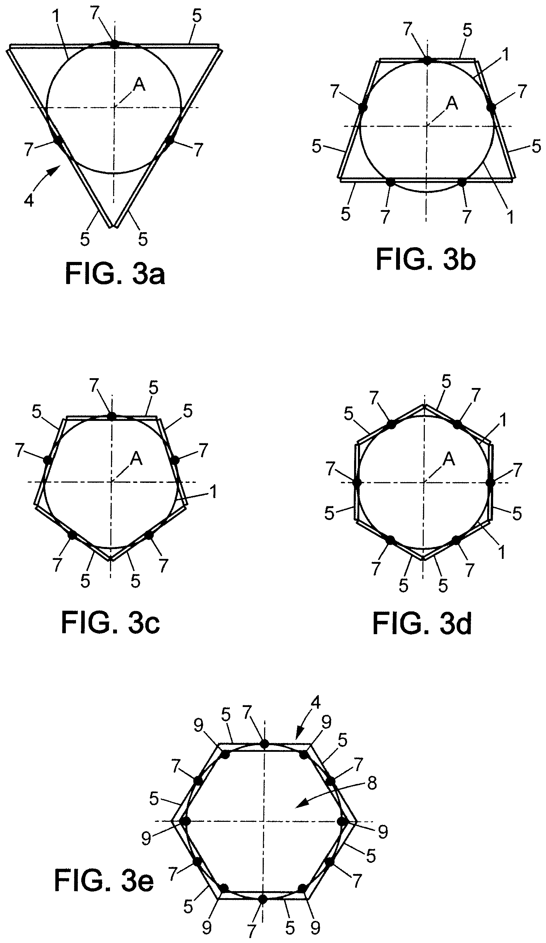

Dans le document de brevet GB 2 270 666, un exemple d'une telle structure support intermédiaire de satellite est représenté sur les figures 2a-2c et 3a-3d, et décrit de la page 7 ligne 28 à la page 10 ligne 15, en référence à ces figures, sur lesquelles cette structure intermédiaire est repérée par la référence 15 et est solidaire de l'anneau d'interface lanceur 14.

Par FR 2 372 083 (ou GB 1 557 500) on connaît une variante de l'état de la technique selon la figure 1d précédemment décrite, et, dans cette variante, les éléments de liaison 1, 21 et 51 des figures 2, 7 et 8 de GB 1 557 500, assurant la liaison entre la structure porteuse du satellite et le véhicule de lancement, sont des structures supports intermédiaires cylindro-coniques, de même nature et sensiblement de même forme que l'élément de liaison 15 ou structure support intermédiaire de la figure 2c de GB 2 270 666, présenté ci-dessus au titre de l'état de la technique.

En effet, GB 1 557 500 se rapporte à une structure porteuse pour un satellite artificiel qui comprend un élément de liaison pour relier ladite structure à un véhicule de lancement, une structure de liaison centrale rigide fixée à cet élément de liaison et s'étendant le long de l'axe de la structure porteuse, et fixées à la structure de liaison centrale, un certain nombre de plates-formes de supports pour supporter des équipements constituant une partie au moins de la charge utile du satellite.

Le but principal de la structure de liaison centrale est de transmettre aux plates-formes de supports les forces d'accélération qui se développent pendant le lancement, tout en assurant que la géométrie du système tout entier ne change rigoureusement pas.

L'objet de GB 1 557 500 est donc bien une structure support intermédiaire agencée en structure centrale de liaison avec un anneau circulaire d'interface lanceur, cette structure centrale de liaison étant fonctionnellement analogue à la structure support intermédiaire 3d de la figure 1d de l'état de la technique décrite ci-dessus.

Une telle structure support intermédiaire, selon GB 2 270 666 ou GB 1 557 500 , ou selon l'une quelconque des figures la à 1d décrites ci-dessus, et connue de l'état de la technique, entraîne une masse ainsi que des coûts de conception et de réalisation supplémentaires. En outre, une telle structure support intermédiaire n'est en général ni générique, c'est-à-dire qu'elle ne peut pas être utilisée pour des satellites de différents types, ni modulaire, et doit être redéveloppée spécifiquement pour chaque satellite d'un type nouveau, ce qui entraîne des surcoûts de développement.

Le but de l'invention est de proposer un satellite dont la structure est allégée, d'une architecture simplifiée, donc d'une réalisation plus économique que les structures de satellite connues de l'état de la technique, et qui soit générique, en ce sens que l'architecture de structure proposée permet de couvrir la gamme des structures, et de s'adapter à des satellites de tailles très différentes, par exemple de 900 à 1700mm de large, de 800 à 3000mm de haut et de 300 à 2000kg de masse, ayant des structures de géométries différentes, par l'utilisation d'un nombre limité de composants de base.

A cet effet, le satellite selon l'invention, ayant une structure du type défini ci-dessus et comprenant un anneau circulaire d'interface lanceur et au moins deux murs primaires sensiblement parallèles à l'axe dudit anneau et reliés rigidement entre eux et audit anneau, se caractérise en ce que chaque mur primaire est en appui direct sur ledit anneau d'interface par une base dudit mur qui est tournée vers ledit anneau d'interface, et chaque mur primaire est fixé rigidement et directement audit anneau d'interface par au moins une liaison quasi-ponctuelle au niveau d'au moins un point ou une zone de tangence ou de croisement de ladite base dudit mur et dudit anneau d'interface.

Par l'appui direct des murs primaires porteurs d'équipements sur l'anneau d'interface lanceur, ces murs, constitués de manière connue et de préférence en panneaux de structure nid d'abeille, deviennent des murs de cisaillement, et l'appui direct supprime toute structure de support intermédiaire du type présenté ci-dessus, et dont un inconvénient supplémentaire est qu'elle est source de souplesse.

Ainsi, la suppression de la structure support intermédiaire permet non seulement des gains de masse et de coûts, en améliorant la simplicité de l'architecture de la structure, mais elle améliore simultanément la modularité, l'adaptabilité, l'intégrabilité et la testabilité de cette architecture et des modules d'équipements dont cette architecture facilite l'intégration, surtout si la structure présente de plus l'une au moins des mesures techniques avantageuses présentées ci-dessous.

La structure selon l'invention peut ne comporter que deux murs primaires, qui sont alors rigidement entretoisés ou entrecroisés, mais, de préférence, la structure de satellite selon l'invention comprend au moins trois murs plans fixés rigidement et adjacents deux à deux en formant une case prismatique, d'axe sensiblement parallèle à l'axe dudit anneau d'interface, et dont la section transversale, perpendiculairement audit axe dudit anneau, est polygonale, et de préférence de forme triangulaire, carrée ou rectangulaire, trapézoïdale, pentagonale ou hexagonale, sans que cette liste soit limitative.

Avantageusement, de plus, la structure du satellite comprend également un plateau porte-équipements, disposé entre lesdits murs, sans contact avec eux, et en appui direct sur ledit anneau d'interface, sur lequel ledit plateau est rigidement et directement fixé à plat, indépendamment de la fixation desdits murs audit anneau d'interface.

Avantageusement en outre, ce plateau porte-équipements est fixé sur l'anneau d'interface par des liaisons également quasi-ponctuelles ou linéaires, sur des arcs de l'anneau d'interface laissés libres par les fixations des murs primaires sur ledit anneau. Ainsi, les différents équipements montés sur ce plateau n'interfèrent pas avec les autres différents équipements montés sur les murs primaires, puisque ces derniers se reprennent directement sur l'anneau d'interface lanceur.

Avantageusement, ledit plateau supporte un sous-ensemble de propulsion et/ou un sous-ensemble de pilotage et contrôle d'orbite et/ou d'attitude du satellite, de sorte que ledit plateau, avec les équipements qu'il supporte et ledit anneau d'interface lanceur auquel ledit plateau est relié, constitue un module de propulsion et/ou de pilotage d'orbite et/ou attitude du satellite, dont le couplage avec un module, par exemple de servitudes, constitué par les murs primaires et les équipements portés par ces derniers, est réduit aux seules liaisons quasi-ponctuelles entre les murs primaires et l'anneau d'interface lanceur.

Avantageusement, la structure du satellite comporte également d'autres murs plans dits secondaires, sensiblement parallèles ou perpendiculaires aux murs primaires, fixés rigidement entre eux et/ou aux murs primaires, pour former de nouvelles cases et augmenter la surface et le volume disponibles pour le logement d'équipements.

Dans le même but d'augmenter la surface et le volume disponibles pour le logement d'équipements, ainsi que de spécialiser des volumes à cet effet, la structure du satellite comporte avantageusement et également d'autres murs plans, sensiblement parallèles à l'axe dudit anneau d'interface, fixés rigidement entre eux et chacun par sa base sur une extrémité de l'un desdits murs primaires, ladite extrémité étant tournée à l'opposé dudit anneau d'interface, de sorte que lesdits autres murs forment une case, par exemple une case de charge utile ou une extension de case de servitudes, de préférence prismatique d'axe parallèle à l'axe dudit anneau d'interface, et lesdits autres murs étant fixés par des liaisons quasi-ponctuelles au-dessus desdits murs primaires.

On comprend ainsi que la case de charge utile et les équipements qu'elle renferme constituent un module de charge utile, que la case de servitudes et les équipements qu'elle contient constituent un module de servitudes, et que le plateau avec le sous-ensemble de propulsion et/ou le sous-ensemble de pilotage et contrôle d'orbite et/ou d'attitude du satellite et fixé à l'anneau d'interface lanceur constituent un troisième module, et que ces trois modules peuvent être intégrés puis testés séparément, les couplage entre modules étant réduits auxdites liaisons quasi-ponctuelles, avec un module de servitudes qui peut se reprendre directement sur l'anneau d'interface lanceur sans interférer avec le plateau du module de propulsion et/ou de pilotage et contrôle d'orbite et/ou d'attitude du satellite.

En outre, la structure du satellite permet que l'extrémité des murs primaires qui est tournée du côté opposé audit anneau d'interface lanceur soit fixée directement, par au moins une liaison quasi-ponctuelle par mur primaire, sur un anneau circulaire d'interface satellite, de préférence de même diamètre que ledit anneau d'interface lanceur, et lui-même destiné à être solidarisé amoviblement à un second anneau d'interface satellite d'un autre satellite, de préférence de structure analogue au satellite selon l'invention, et empilable sur ce dernier pour un lancement groupé.

Ainsi, la structure du satellite de l'invention permet des structures superposables pour le lancement de satellites jumeaux, et plus généralement pour des lancements multiples aux fins de constituer des constellations de satellites.

Afin d'améliorer encore le découplage et l'isolement vibratoire, en particulier entre les murs primaires et le plateau porte-équipements logé entre eux, ou bien entre les murs d'un module de charge utile et les murs d'un module de servitudes, ou bien entre le lanceur et le satellite, au moins une liaison quasi-ponctuelle reliant ledit anneau d'interface lanceur ou d'interface satellite, le cas échéant, à un mur ou à un plateau porte-équipements ou de rigidification et/ou de support de charge utile comprend au moins ou est associée à un isolateur (ou atténuateur) de chocs et/ou vibrations.

En outre, le satellite a avantageusement une structure telle que l'ensemble composé dudit plateau fixé sur l'anneau d'interface lanceur, forme un module démontable sans démontage d'aucune autre partie du satellite, le démontage dudit ensemble permettant l'ouverture du satellite pour autoriser les manipulations internes, en particulier par au moins un opérateur intervenant lors de l'intégration ou les tests d'un module de servitudes et/ou d'un module de charge utile.

L'invention a également pour objet un procédé de mise en oeuvre du satellite, rendu possible du fait de la structure particulière du satellite, et qui se caractérise en ce que, d'une part, on assemble au moins une case de murs primaires sans la fixer à l'anneau d'interface lanceur, et, d'autre part, on assemble le plateau porte-équipements audit anneau en un ensemble formant un module démontable sans le fixer à ladite case, on intègre des équipements dans ladite au moins une case et sur ledit module démontable, puis on teste, et certifie ladite au moins une case équipée et ledit module démontable équipé, et on exécute l'une au moins des opérations d'intégration, de test, et de certification séparément sur ladite au moins une case et ledit module démontable.

Si le satellite comporte plusieurs cases à équipements, on comprend que chacune d'elles peut être également assemblée, et/ou intégrée en équipements, et/ou testée et/ou certifiée indépendamment et séparément de la ou des autres cases du satellite.

A cet effet, et avantageusement, l'opération d'intégration d'équipements dans au moins une case de murs primaires s'effectue par l'ouverture à la base de ladite case, avant montage ou après démontage dudit module démontable respectivement sur ou de ladite case, sans démontage d'aucun autre mur ou panneau porteur d'équipements.

En outre, lorsque le procédé est mis en oeuvre sur un satellite dont le plateau porte-équipements du module démontable est équipé d'un sous-ensemble de propulsion comprenant au moins un réservoir d'ergol(s), et constituant un module de propulsion, avantageusement ledit au moins un réservoir est rempli d'ergol(s) et/ou vidangé de l'ergol qu'il contient respectivement avant montage et/ou après démontage du module de propulsion et de ladite au moins une case équipée et, de préférence, du reste du satellite.

D'autres caractéristiques et avantages de l'invention ressortiront de la description donnée ci-dessous, à titre non limitatif, d'exemples de réalisations décrits en référence aux dessins annexés sur lesquels :
- les figures la à 1d, déjà décrites ci-dessus, sont des vues schématiques en perspective éclatée de satellites avec des exemples de structures supports intermédiaires selon l'état de la technique ;
- les figures 2a et 2b sont des vues schématiques respectivement en perspective éclatée et en vue de dessus d'un premier exemple de structure de satellite selon l'invention ;
- la figure 2c est une vue analogue à la figure 2b pour une variante de structure du satellite selon les figures 2a et 2b ;
- les figures 3a à 3e sont des vues analogues à la figure 2b pour d'autres variantes de satellites selon l'invention, selon la forme du polygone de la section transversale du satellite, la figure 3e étant une variante de la réalisation hexagonale de la figure 3d ;
- les figures 4a à 4c sont trois vues schématiques en perspective représentant trois étapes de l'assemblage de la structure d'un satellite selon les figures 2a et 2b ou 2c ;
- les figures 5a à 5f sont des vues schématiques en perspective de satellites ayant différentes formes de structures avec différentes configurations d'aménagements et de charges utiles selon l'invention ;
- les figures 6a, 6b et 6c sont des vues en perspective respectivement d'un exemple d'anneau d'interface lanceur et d'un exemple de ferrure pour la liaison quasi-ponctuelle entre l'anneau d'interface et un mur primaire, et un détail de fixation par deux liaisons quasi-ponctuelles d'un mur primaire sur l'anneau ;
- la figure 7 est une vue schématique en perspective d'une liaison latérale angulaire de deux murs adjacents, par une cornière ;
- la figure 8a est une vue schématique en partie en élévation latérale et en partie en coupe par un plan médian parallèle aux murs d'un exemple de ferrure de liaison de deux murs superposés, pour réaliser la structure de satellite selon la figure 5a par exemple ;
- la figure 8b est une vue partielle de la liaison de la figure 8a, en coupe par un plan perpendiculaire au plan de la figure 8a et passant par l'axe de la vis de liaison ;
- les figures 9a, 9b et 9c sont trois vues schématiques en perspective, correspondant sensiblement et respectivement aux figures 4a, 4b et 4c, et représentant trois étapes du montage de la structure d'un satellite selon l'invention, en vue de parvenir à des configurations analogues à celles des figures 5a à 5c, ou encore à deux satellites empilés selon la figure 5e;
- la figure 10 est une vue schématique en perspective éclatée d'un satellite selon l'invention à trois modules, dont un module de propulsion, en bas de la figure, un module de servitudes, au milieu de la figure, et un module de charge utile, en haut de la figure ;
- la figure 11 est une vue en perspective d'un exemple d'atténuateur ou isolateur de chocs et vibrations, utilisable pour raccorder un mur primaire à l'anneau d'interface lanceur, dans un satellite selon l'invention ; et
- les figures 12a et 12b représentent schématiquement deux positions d'une case ouverte à sa base pour permettre l'intégration d'équipements dans cette case.

Dans la description qui suit, les mêmes références numériques ou alphanumériques sont utilisées pour désigner des éléments ou composants identiques ou analogues sur les différentes figures.

La figure 2a représente un anneau 1 circulaire d'interface lanceur, ayant l'un des trois diamètres standards, tel que celui des figures la à 1d de l'état de la technique, et sur lequel est directement fixée une case à équipements 4, dans cet exemple en forme de parallélépipède rectangle (et plus précisément de section carrée), constituée par la liaison rigide entre eux de quatre murs plans 5 porte-équipements, adjacents deux à deux le long de leurs bords latéraux, chacun parallèle à l'axe A de l'anneau 1, c'est-à-dire l'axe géométrique perpendiculaire au plan de l'anneau circulaire 1 et passant par le centre de cet anneau 1, cet axe A étant considéré comme axe longitudinal du satellite, car parallèle ou confondu avec l'axe du lanceur lorsque le satellite est monté sur ce dernier, chacun des murs 5 étant ainsi parallèle à un mur 5 opposé et perpendiculaire aux deux murs 5 qui lui sont adjacents.

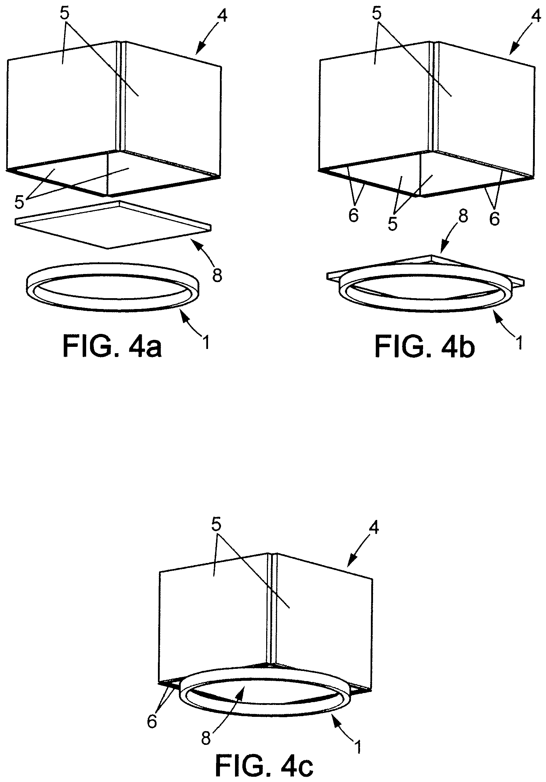

L'anneau 1 circulaire est donc indépendant de toute structure support intermédiaire et lié rigidement et directement aux murs primaires indépendamment de toute structure support intermédiaire, comme visible aussi sur les figures 4a à 4c, 6a, 6c, 9a à 9c et 10 décrites ci-dessous, et contrairement à l'état de la technique tel que rappelé ci-dessus.

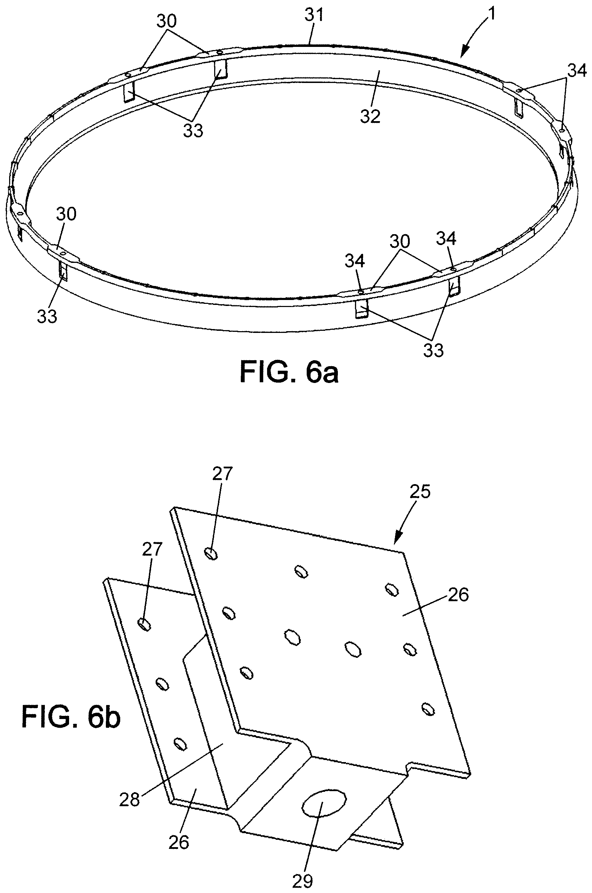

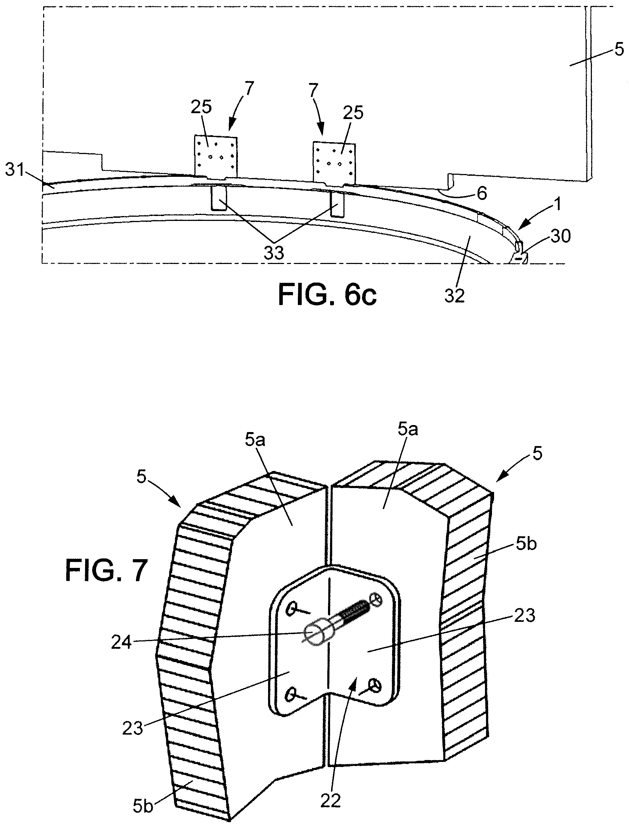

Dans cet exemple de réalisation, chacun des quatre murs 5, dits murs primaires, est fixé sur l'anneau 1 par la base 6 du mur 5, dont le milieu vient reposer, par une faible surface, en appui direct contre une faible surface de la face supérieure de l'anneau 1, au niveau pratiquement d'un point ou d'une zone de tangence de la base 6 de ce mur 5 avec l'anneau 1, et, à ce niveau, la fixation du mur 5 à l'anneau 1 est assurée par une unique liaison quasi-ponctuelle, représentée schématiquement en 7. Cette liaison quasi-ponctuelle peut, par exemple, être une liaison vissée, à une seule vis, telle que décrite ci-après en référence aux figures 6b et 6c.

Ainsi, les quatre liaisons quasi-ponctuelles 7, avantageusement identiques, apparaissent diamétralement opposées deux à deux, sur les figures 2a et 2b, par rapport à l'axe A de l'anneau 1, qui est parallèle ou confondu avec l'axe longitudinal de la case 4, de section transversale carrée (perpendiculairement à l'axe A).

Un plateau 8 porte-équipements, qui est plan et perpendiculaire à l'axe A de l'anneau 1, est disposé entre les bases 6 des murs primaires 5, et sans contact avec ces murs 5, et ce plateau 8 est rigidement fixé à plat, directement en appui, sur l'anneau 1, indépendamment de la fixation des murs 5 sur cet anneau par les liaisons quasi-ponctuelles 7, la fixation du plateau 8 à l'anneau 1 étant assurée par des fixations, avantageusement identiques, schématiquement repérées en 9, dans les zones des quatre coins du plateau 8, dans cet exemple de forme carrée. Ainsi, chaque fixation 9 du plateau 8 sur l'anneau 1 se trouve entre deux liaisons quasi-ponctuelles 7 de fixation de deux murs 5 adjacents sur l'anneau 1.

Les fixations 9 du plateau 8 sur l'anneau 1 peuvent être des liaisons également quasi-ponctuelles, du même type ou d'un type différent des liaisons quasi-ponctuelles 7 des murs 5 au plateau 1, ou encore des liaisons linéaires, ou quasi-linéaires, voire légèrement cintrées en arc de cercle, et qui sont situées chacune sur l'un des arcs de cercle de l'anneau 1 laissés libres par les liaisons 7 de fixation des murs primaires 5 sur l'anneau 1, c'est-à-dire les arcs de cercle de l'anneau 1 qui sont recouverts par les zones des coins du plateau 8.

En variante, comme représenté sur la figure 2c, l'un au moins, mais de préférence chacun, des quatre murs 5 d'une case 4, de section transversale carrée légèrement plus petite que la précédente par rapport au même anneau 1, peut être fixé directement en appui par sa base 6 sur l'anneau 1 en deux points, en positionnant ce mur 5 de sorte que sa base 6 croise la face supérieure de l'anneau 1 en deux points ou deux petites surfaces, et à l'aide de deux liaisons quasi-ponctuelles 7, dont l'une au niveau de chacun des deux points ou zones de croisement, chaque liaison 7 pouvant être réalisée matériellement de la même façon qu'une liaison quasi-ponctuelle 7 des figures 2a et 2b, ou d'une façon différente, avec une ferrure, une vis et un ou des renforts, par exemple en insert, sur l'anneau 1 et/ou dans le mur 5 considéré.

Le plateau 8 carré se fixe directement à plat sur l'anneau 1, comme dans l'exemple des figures 2a et 2b, c'est-à-dire entre les murs 5 et sans contact avec ces murs 5, et indépendamment de la fixation des murs 5 sur l'anneau 1. La fixation du plateau 8 sur l'anneau 1 est assurée par des liaisons 9 quasi-ponctuelles ou linéaires, sur les arcs de cercle de l'anneau 1 sur lesquels reposent les zones des coins du plateau 8.

Les avantages de ces réalisations, en plus des gains de masse et de coûts qui découlent de la suppression de la structure support intermédiaire de l'état de la technique, sont que les efforts passant dans les murs 5 se situent aux points d'attache 7 des murs 5 sur l'anneau 1, ce qui permet de simplifier, voire même d'éliminer, des pièces secondaires, comme des poutres d'angle sur lesquelles les murs sont attachés, dans des réalisations de l'état de la technique, et qui reprennent une grande partie des efforts au lancement du satellite.

Du point de vue mécanique, la structure de satellite selon l'invention permet d'avoir des chemins mécaniques indépendants, par où sont transmises les contraintes, entre l'anneau 1 d'interface lanceur et les éléments structuraux du satellite, dont les murs 5 primaires.

Dans les structures selon l'invention des figures 2a à 2c, de simples cornières peuvent être utilisées pour fixer latéralement les murs 5 les uns aux autres, comme représenté schématiquement sur la figure 7, décrite ci-après.

De nombreuses variantes de réalisation de la structure selon l'invention sont possibles, puisque cette structure peut se décliner en différentes tailles, selon le diamètre, choisi parmi les trois valeurs standards possibles, des anneaux 1 d'interface lanceur, et en différentes géométries des cases prismatiques telles que 4, d'axe parallèle ou confondu avec l'axe A de l'anneau 1, et dont la section transversale polygonale (perpendiculairement à l'axe A de l'anneau 1), peut être, de préférence, triangulaire, en trapèze isocèle, pentagonale ou hexagonale, selon que la case 4 correspondante est constituée de trois, quatre, cinq ou six murs primaires 5, et comme représenté respectivement sur les figures 3a, 3b, 3c et 3d, en plus de la section polygonale carrée des figures 2b et 2c, ou encore rectangulaire.

L'architecture de la structure de satellite selon l'invention peut donc être adoptée pour toutes les dimensions d'interface lanceur normalisées, et peut aussi être adoptée pour des structures de cases 4 à équipements de différentes sections transversales, telles que celles représentées sur les figures 2b, 3a, 3b, 3c et 3d notamment, dont les plus intéressantes semblent être les sections carrées ou hexagonales. Sur les figures 3a, 3b, 3c et 3d, comme sur la figure 2b, chacun des murs primaires 5 des cases 4 représentées en coupe transversale est fixé à l'anneau 1 d'interface lanceur par une unique liaison quasi-ponctuelle 7 au point de tangence de la base de ce mur 5 avec l'anneau 1, sauf la grande base de la section en trapèze isocèle de la figure 3b, pour laquelle le mur 5 correspondant est fixé à l'anneau 1 par deux liaisons quasi-ponctuelles 7 situées chacune à l'un respectivement des deux points d'intersection de cette grande base avec l'anneau 1. Mais, comme pour la variante de la figure 2c par rapport à la réalisation de la figure 2b pour une section transversale carrée, il est possible, selon des variantes, de fixer chacun des murs 5 à l'anneau 1 par deux liaisons quasi-ponctuelles 7, pour des cases 4 ayant certaines des sections polygonales précitées, notamment la section triangulaire.

Sur les figures 3a à 3d, le plateau porte-équipements tel que le plateau 8 des figures 2a à 2c, destiné en particulier à supporter un sous-ensemble de propulsion du satellite et/ou un sous-ensemble de pilotage et contrôle d'orbite et/ou d'attitude du satellite, n'est pas représenté, mais, comme sur les figures 2a à 2c, ce plateau 8 vient s'insérer entre les murs primaires 5, sans appui sur ces murs 5, en étant fixé à plat directement sur l'anneau 1, indépendamment des liaisons des murs 5 fixés chacun directement à cet anneau 1.

Mais, dans ces réalisations, le plateau porte-équipements tel que 8 peut présenter une forme polygonale homothétique de la forme de la section transversale polygonale de la case 4 prismatique formée par les murs 5 correspondants, en étant légèrement inférieure à cette section polygonale, pour faciliter la mise en place du plateau porte-équipements entre les bases 6 des murs 5, et ce plateau 8 est avantageusement fixé en appui direct sur l'anneau d'interface 1 au niveau de zones d'appui voisines des sommets de la section transversale polygonale correspondante, par des liaisons également quasi-ponctuelles ou linéaires, sur des arcs de cercle de l'anneau 1 qui sont recouverts par lesdites zones d'appui du plateau 8 qui sont voisines des sommets de la section transversale polygonale considérée.

La figure 3e représente une variante de réalisation hexagonale, avec un plateau 8 hexagonal disposé entre les six murs 5 de la case hexagonale correspondante 4, et fixé à proximité de chacun de ses six sommets, par une liaison quasi-ponctuelle ou linéaire 9, sur l'anneau 1.

Quel que soit le nombre de murs 5 fixés rigidement et adjacents deux à deux pour former une case 4 à équipements, et donc quelle que soit la forme polygonale de la section transversale de la case 4, l'assemblage des trois sous-ensembles de base de la structure d'un satellite selon l'invention, qui sont un anneau 1 d'interface lanceur, une case 4 de murs 5 porte-équipements, et un plateau 8 porte-équipements, et plus spécifiquement un plateau 8 porteur d'un dispositif de propulsion et, de préférence de plus, d'un dispositif de pilotage et contrôle d'orbite et d'attitude du satellite, est effectué selon un procédé comprenant trois étapes schématiquement représentées sur les figures 4a à 4c, pour une case 4 de section carrée, et dont l'une des étapes (voir figure 4a) est la réalisation de la case 4 à partir de murs 5, l'anneau 1 et le plateau 8 étant chacun réalisé et préparé individuellement et séparément. Avant, après ou simultanément à la construction de la case 4, le plateau 8 est fixé directement à plat sur l'anneau 1 (voir figure 4b), comme décrit ci-dessus, et ensuite, la case 4 est fixée par la base 6 de ses murs 5 directement sur l'anneau 1, comme également déjà décrit ci-dessus, autour du plateau 8 et sans contact avec lui, et indépendamment des fixations du plateau 8 sur l'anneau 1 (voir figure 4c).

Dans cette structure, l'anneau 1 et le plateau 8 solidaires l'un de l'autre constituent un module séparable du reste de la structure (ici la case 4) par le simple démontage ou la simple libération des liaisons quasi-ponctuelles (telles que 7) de fixation de la case 4 à l'anneau 1, par exemple par dévissage d'un nombre limité de vis, et, inversement, ce module, préalablement assemblé, préparé, équipé, testé et certifié, peut être rendu solidaire du reste, séparément assemblé, préparé, testé et certifié, de la structure du satellite à l'aide desdites liaisons quasi-ponctuelles, par revissage du nombre limité de vis précité, pour obtenir le satellite dans sa configuration de lancement.

En outre, avant le montage de ce module anneau 1-plateau 8 sur le reste de la structure (la case 4), l'intérieur de cette case 4 est accessible au moins par sa partie inférieure ouverte à au moins un opérateur, pour l'intégration des équipements prévus dans cette case 4 et leur test, sans autre démontage d'une quelconque partie du satellite, et en particulier sans avoir à ouvrir un mur 5 par au moins un panneau pivotant par exemple, comme cela se pratique habituellement sur les satellites de l'état de la technique.

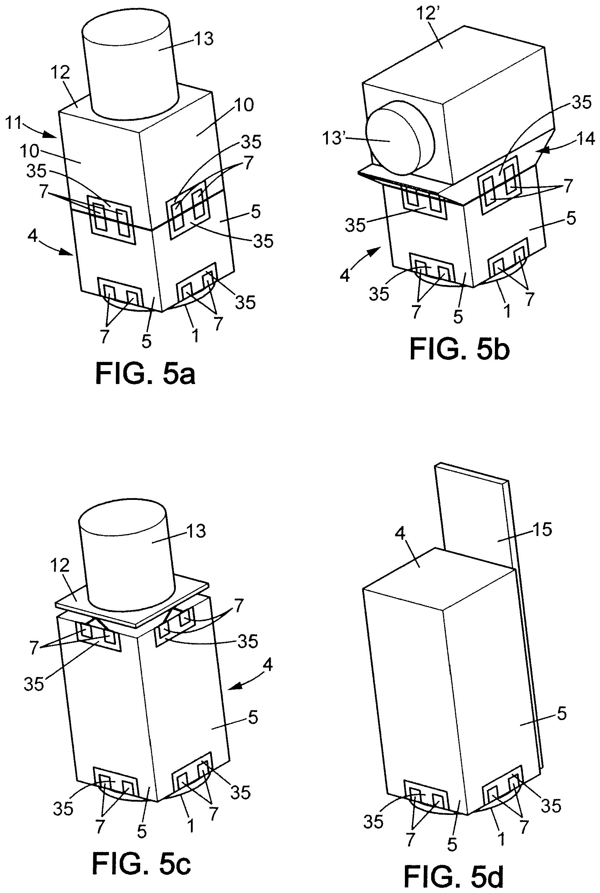

L'architecture de structure de satellite selon l'invention est adaptable à de nombreuses formes et nombreux aménagements possibles de la plateforme de satellite avec sa charge utile, et les figures 5a à 5f représentent, à titre d'exemples, différentes structures basées sur une architecture générique de section transversale carrée, étant bien entendu que des structures basées sur une architecture générique de section transversale de forme polygonale différente, par exemple selon les figures 3a à 3d, sont également possibles.

Sur la figure 5a, on retrouve une case d'équipements 4 cubique, dont chacun des quatre murs primaires 5 est directement fixé sur l'anneau d'interface lanceur 1 par deux liaisons quasi-ponctuelles 7, comme précédemment décrit en référence à la figure 2c, avec, entre les murs 5, un plateau tel que 8 porteur d'un sous-ensemble de propulsion et d'un sous-ensemble de pilotage et contrôle d'orbite et d'attitude du satellite, ce plateau étant directement fixé sur l'anneau 1 indépendamment des liaisons 7 et sans contact avec les murs 5.

La structure du satellite comporte également d'autres murs plans 10, de mêmes formes, dimensions et structure que les murs 5, et également fixés rigidement entre eux, deux à deux par leurs bords latéraux adjacents, et chacun en outre fixé par sa base sur une extrémité de l'un respectivement des murs primaires 5, cette extrémité étant présentée par ce mur 5 du côté opposé à sa base 6 et à l'anneau 1. Ainsi, les quatre murs 10 carrés et montés perpendiculaires deux à deux au-dessus des quatre murs 5 de la case 4 constituent une seconde case 11, également de forme cubique, et, de manière plus générale, pour toute forme polygonale de la case 4, d'autres murs tels que 10 peuvent former une autre case de forme prismatique d'axe parallèle à l'axe A de l'anneau 1 d'interface, cette autre case 11 ainsi montée en second étage sur la case de premier étage 4 au-dessus de l'anneau 1 pouvant être une case de charge utile, alors que la case 4 est une case de servitudes.

Chacun des murs 10 est, dans cette structure, avantageusement fixé par sa base à l'extrémité supérieure d'un mur 5 également par deux liaisons quasi-ponctuelles 7, dont chacune est à l'aplomb de l'une respectivement des deux liaisons quasi-ponctuelles 7 fixant la base du mur 5 correspondant à l'anneau 1. Ainsi, les chemins de passage d'efforts entre les murs 5 et 10, donc entre les cases 4 et 11, sont essentiellement parallèles à l'axe de l'anneau 1.

De plus, sur la figure 5a, la case de charge utile 11 est représentée comme étant partiellement fermée, à son extrémité supérieure (du côté opposé à la case de servitudes 4), par un plateau 12, fixé à l'extrémité de chacun des murs 11, du côté opposé à sa base, de préférence également par des liaisons quasi-ponctuelles (non représentées), de sorte à rigidifier la case 11, et supportant lui-même un instrument optique 13, du type télescope spatial, détecteur stellaire ou autre, complétant la charge utile embarquée dans la case 11, et constituant avec elle un module de charge utile spécifique, au-dessus d'un module de servitudes générique défini par la case 4, et d'un module générique de propulsion et pilotage et contrôle d'orbite et d'attitude du satellite, constitué par l'anneau 1 et le plateau tel que 8 (non visible sur la figure 5a) équipé de la manière précitée.

Sur la figure 5b, on retrouve un module de propulsion sur l'anneau 1, à l'intérieur d'un module de servitudes générique comprenant la case 4 fixée sur l'anneau 1, et un module de charge utile spécifique, différent de celui de la figure 5a, car comprenant dans ce cas un instrument optique 13', orienté perpendiculairement à l'axe de l'anneau 1, et non parallèlement à ce dernier comme pour l'instrument 13 de la figure 5a, l'instrument optique 13', par exemple un télescope, une caméra de prise de vue terrestre, ou autre, étant supporté à une extrémité latérale d'une case 11' de charge utile de forme parallélépipédique rectangle solidaire, à sa base, d'un caisson 14 de liaison, par des liaisons quasi-ponctuelles 7, à chacun des quatre murs 5 de la case générique de servitudes 4.

Sur la figure 5c, la case 4 est constituée par l'assemblage de quatre murs primaires 5 rectangulaires, de longueur nettement supérieure à la largeur, de sorte que la case 4 présente une forme de parallélépipède rectangle allongé, fixé sur l'anneau 1 par une petite face d'extrémité, les murs 5 étant orientés parallèlement à l'axe de l'anneau 1 le long de leurs grands côtés. Le satellite présente ainsi une structure de longueur ou hauteur importante et adaptée, la case 4 supportant, dans cet exemple, une charge utile optique 13, analogue à celle de la figure 5a, sur un plateau supérieur 12 supporté sur l'extrémité supérieure de chacun des quatre murs 5 par deux liaisons quasi-ponctuelles 7, schématiquement représentées, et toujours à l'aplomb chacune de l'une respectivement des deux liaisons quasi-ponctuelles 7 de fixation de la base du mur 5 correspondant sur l'anneau 1.

Sur la figure 5d, la structure du satellite est également allongée parallèlement à l'axe de l'anneau 1, et sa case de servitudes 4, en forme de parallélépipède rectangle fixé par une petite face sur l'anneau 1, supporte, latéralement contre la face externe de l'un de ses murs 5 rectangulaires, une charge utile constituée d'un instrument de type radar. 15. Dans ce cas, comme dans celui de la figure 5c, la structure du satellite est avantageuse car les efforts restent toujours transmis essentiellement parallèlement à l'axe de l'anneau 1, au droit des murs 5.

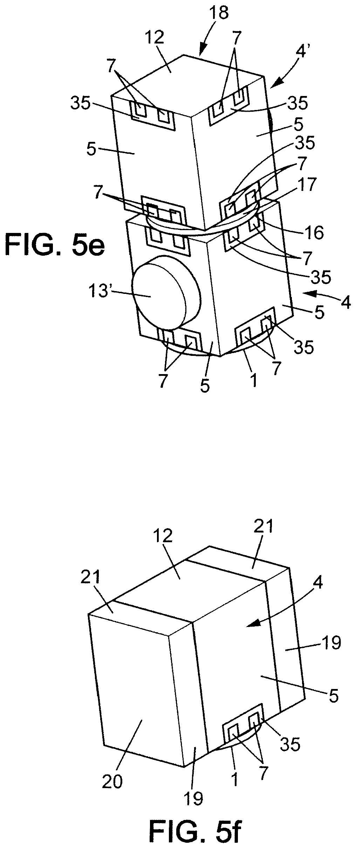

L'architecture de la structure selon l'invention permet également le lancement multiple de satellites empilés, en utilisant des anneaux d'interface du même type que les anneaux 1 d'interface lanceur. Un exemple d'une telle réalisation est représenté sur la figure 5e, sur laquelle on retrouve une case 4 de base, dont chacun des quatre murs 5 est fixé par sa base et à l'aide de deux liaisons quasi-ponctuelles 7 à l'anneau 1, l'un des murs 5 portant, en saillie sur sa face externe, un instrument optique 13' comme charge utile. En outre, par son extrémité qui est tournée du côté opposé à l'anneau 1 d'interface lanceur, chacun des murs 5 est également fixé, par deux liaisons quasi-ponctuelles 7, directement sous un anneau 16 circulaire d'interface satellite, dans cet exemple de même diamètre que l'anneau 1 d'interface lanceur. L'anneau 16 est lui-même solidarisé amoviblement à un second anneau 17 d'interface satellite, appartenant à un deuxième satellite, dont la structure est, dans cet exemple, analogue à celle du satellite comportant la case 4 et l'anneau 1. Le second satellite 18 comporte également un module de propulsion et de pilotage et contrôle d'orbite et d'attitude, non représenté sur la figure 5e, sauf par son anneau 17 qui supporte directement un plateau porteur du sous-ensemble propulseur et du sous-ensemble de pilotage et contrôle d'orbite et d'attitude, à l'intérieur des quatre murs primaires 5 d'une case cubique 4' du satellite 18, analogue à la case 4 précédemment décrite, et dont chacun des murs 5 est directement fixé à l'anneau 17 d'interface satellite par deux liaisons quasi-ponctuelles 7, indépendamment de liaisons analogues ou linéaires entre cet anneau 17 et le plateau interne précité. Ce dernier est sans contact avec ces murs 5, chacun également fixé par deux autres liaisons quasi-ponctuelles 7, au niveau de son extrémité supérieure, du côté opposé à l'anneau 17, à un plateau supérieur tel que 12, pour la rigidification et la fermeture de la case 4'. Les liaisons 7 de chaque mur 5 de la case 4' à ce plateau 12 sont chacune à l'aplomb de l'une respectivement des deux liaisons 7 analogues de ce mur 5 à l'anneau d'interface satellite 17, elles-mêmes à l'aplomb chacune de l'une respectivement des deux liaisons 7 analogues d'un mur 5 correspondant de la case 4 à l'anneau 16 d'interface satellite, ainsi qu'à l'une respectivement des deux liaisons 7 de la base de ce même mur 5 de la case 4 à l'anneau 1 d'interface lanceur, toujours pour une transmission des efforts dans une direction sensiblement parallèle à l'axe commun aux anneaux d'interface 1, 16 et 17, au droit des murs 5 des deux cases 4 et 4' superposées des deux satellites ainsi empilés pour un lancement groupé.

Dans une telle structure, les deux anneaux d'interface satellite 16 et 17 sont nécessairement d'un même diamètre, pour pouvoir être solidarisés l'un à l'autre, pendant un lancement groupé, puis désolidarisés l'un de l'autre pour un largage individualisé de chacun d'eux, après que les deux satellites solidarisés l'un à l'autre soient, ensembles, largués du lanceur commun par la séparation entre l'anneau d'interface lanceur 1 et l'anneau analogue sur l'extrémité supérieur du lanceur. Dans une autre réalisation de la séquence de largage compatible avec le concept de structure proposé, le satellite supérieur 18 est tout d'abord largué par commande de la séparation entre les anneaux d'interface satellite 16 et 17, puis que le satellite restant est à son tour largué par la séparation entre l'anneau d'interface lanceur 1 et l'anneau analogue sur le lanceur.

L'architecture de structure selon la présente invention permet également la réalisation de structures spécifiques, dont un exemple est représenté sur la figure 5f, à partir d'un module de base comprenant l'anneau 1 d'interface lanceur auquel sont directement fixés, par leur base et des liaisons quasi-ponctuelles 7, les quatre murs 5 (dont un seul est visible sur la figure 5f) d'une case 4 parallélépipédique rectangle, à laquelle sont fixés d'autres murs plans, dits secondaires, dont certains 19 sont fixés parallèlement et dans le prolongement latéral, de part et d'autre, de deux murs 5 primaires opposés, dont d'autres murs plans secondaires 20 sont fixés parallèlement aux deux autres murs primaires 5 opposés et perpendiculairement aux murs secondaires 19, tandis que d'autres murs secondaires 21 sont perpendiculaires aux murs primaires 5 et aux murs secondaires 19 et 20, ainsi qu'à l'axe de l'anneau 1, et prolongent latéralement de part et d'autre un plateau supérieur 12 de fermeture de la case 4, ces murs secondaires 19, 20 et 21 étant fixés rigidement entre eux et/ou aux murs primaires 5 de sorte à former de nouvelles cases et augmenter la surface et le volume disponibles pour le logement d'équipements. Dans l'exemple particulier de la figure 5f, deux cases supplémentaires en forme de parallélépipède rectangle sont ainsi aménagées latéralement de part et d'autre de la case 4 centrale. La fixation rigide des murs secondaires 19, 20 et 21 entre eux et/ou aux murs primaires 5 peut être assurée de la même manière que la fixation rigide de deux murs primaires 5 entre eux, au niveau de bords latéraux par lesquels deux murs primaires 5 et/ou secondaires 19, 20, 21 sont adjacents, comme représenté, par exemple, sur la figure 7, à l'aide d'une cornière d'angle 22, dont chacune des deux pattes 23 est vissée dans l'un respectivement des deux murs 5 que cette cornière 22 relie l'un à l'autre, par deux vis 24 vissées dans la face interne de l'un respectivement des deux murs 5.

Les murs primaires 5 comme les murs secondaires 19, 20 et 21 sont des murs plans, dont chacun est, de préférence et de manière bien connue, constitué d'un panneau de structure en nid d'abeille à peaux 5a en aluminium ou alliage d'aluminium, et à partie centrale alvéolée 5b composite ou également en aluminium ou alliage d'aluminium, du fait de la légèreté et de la bonne conductibilité thermique de l'aluminium et de ses alliages. Pour guider les vis 24 et empêcher la détérioration des panneaux constituant les murs 5, 19, 20 et 21, au niveau de leur fixation par des cornières 22, les panneaux correspondants peuvent être équipés sur les zones de leurs bords où sont fixées les cornières 22, d'inserts métalliques (non représentés sur la figure 7) intégrés dans les bords correspondants des panneaux, de sorte à affleurer leur face interne.

Dans toutes les structures de satellite selon l'invention, et telles que décrites ci-dessus, il peut être avantageux d'avoir des murs primaires 5 et/ou secondaires 19, 20 et 21 non démontables, ce qui diminue d'autant le nombre de pièces secondaires ou d'assemblage, telles que les cornières 22, le nombre d'opérations d'assemblage, ainsi que les contraintes liées à la démontabilité des liaisons vissées entre murs. Des pièces secondaires, comme des interfaces entre des équipements à fixer à des murs et ces murs primaires 5 ou secondaires 19, 20 et 21 peuvent servir à renforcer les liaisons entre murs, par exemple des supports d'équipements montés dans les coins ou dièdres formés entre deux ou trois murs ou entre des murs et un plateau.

Des inserts de renfort de bords de panneaux sont avantageusement intégrés dans les parties de la base et/ou du bord d'extrémité opposé à cette base et au niveau desquelles des murs tels que 5 et 10 sont fixés par des liaisons quasi-ponctuelles 7 à l'anneau 1, ou entre eux ou encore à des plateaux tels que 12, de rigidification de la structure et/ou de support de charge utile, car, avantageusement, les liaisons quasi-ponctuelles 7, ou au moins certaines d'entre elles, peuvent être réalisées sous la forme d'une liaison mécanique vissée, comportant au moins une ferrure de renfort, comme décrit à présent, à titre d'exemple, en référence aux figures 6a à 6c, pour la liaison d'un mur primaire 5 à l'anneau 1.

La figure 6b représente une ferrure 25, pouvant être utilisée en insert pour réaliser une liaison quasi-ponctuelle 7, et agencée en chape à deux branches parallèles 26, chacune d'une même forme rectangulaire et entre lesquelles la base 6 d'un mur primaire 5 est destinée à être engagée et retenue par vissage de sept vis (non représentées), dont chacune traverse deux trous 27 coaxiaux, en regard l'un de l'autre dans les deux branches 26, perpendiculairement à ces branches 26, en traversant la partie de la base du mur 5 engagée entre les branches 26, et perpendiculairement également à l'axe de l'anneau d'interface 1 lorsque la chape 25 est vissée en position de solidarisation sur l'anneau 1 de la figure 6a. A cet effet, les deux branches 26 sont saillantes vers le haut sur un fond de chape 28 traversé par un alésage 29, sensiblement parallèle à l'axe A de l'anneau 1 lorsque la chape 25 est en position sur ce dernier, pour le passage d'une vis (non représentée) de fixation de la chape 25 sur l'anneau 1, au niveau d'une languette 30, plane, perpendiculaire à l'axe A de l'anneau 1, et en saillie radiale vers l'extérieur et vers l'intérieur de l'anneau 1, sur le bord d'extrémité supérieure 31 d'un voile 32, cylindrique de section circulaire de l'anneau 1, et au droit d'une lumière 33, de forme sensiblement rectangulaire ménagée dans le voile 32, et d'une taille suffisante pour pouvoir y loger et manoeuvrer un écrou (non représenté) qui est vissé sur l'extrémité inférieure de la tige filetée de la vis traversant l'alésage 29 du fond de chape 28 et un orifice correspondant 34 ménagé dans la languette 30 de l'anneau 1, pour la fixation rigide de la chape 25 sur l'anneau 1. La chape 25 est intégrée dans une découpe de forme correspondant à celle du fond de chape 28, ménagée dans la base 6 d'un mur 5, à l'endroit d'une liaison quasi-ponctuelle 7, de sorte que le pourtour de la découpe dans le mur 5 est chevauché par les branches 26, latéralement des deux côtés et vers le centre du mur 5, parallèlement à l'axe A de l'anneau, lorsque le mur 5 est fixé à ce dernier. On réalise ainsi une liaison quasi-ponctuelle 7, pour fixer la base 6 d'un mur primaire 5 sur l'anneau 1, comme représenté sur la figure 6c, qui correspond à une fixation d'un mur 5 sur l'anneau 1 par deux liaisons quasi-ponctuelles 7, du fait que la base de ce mur 5 croise l'anneau 1 en deux « points » ou petites zones de contact, au niveau de deux languettes 30 successives sur l'anneau 1, comme schématiquement représenté sur la figure 2c par les deux liaisons quasi-ponctuelles 7 d'un même mur 5 à l'anneau 1. La même chape 25 peut être utilisée pour fixer la base de murs 5 à un anneau 17 d'interface satellite, dans la réalisation de la figure 5e, ou encore, en insert et en position inversée avec ses branches 26 saillantes vers le bas, pour chevaucher le pourtour d'une découpe dans le bord supérieur d'un mur 5 et le fixer à l'autre anneau d'interface satellite 16, dans cette même réalisation.

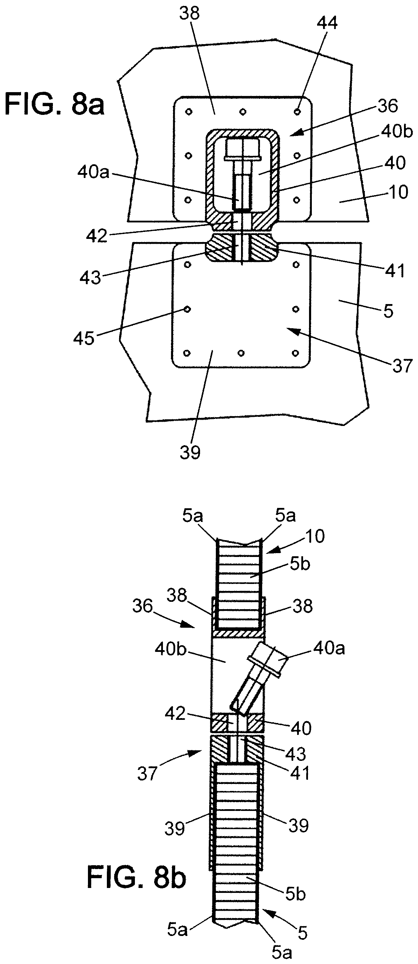

Concernant la réalisation des liaisons quasi-ponctuelles 7 entre un mur primaire 5 fixé directement à l'anneau 1 d'interface lanceur et un autre mur 10 (voir la figure 5a) qui se monte dans le prolongement dudit mur 5, dans la direction de l'axe A de l'anneau 1, un exemple de réalisation est représenté sur les figures 8a et 8b.

Sur ces figures 8a et 8b, la liaison quasi-ponctuelle démontable destinée à assurer l'interface entre deux murs 5 et 10 dans la direction de l'axe A de l'anneau 1 comprend deux ferrures d'attache, chacune agencée en chape 36 ou 37 à deux branches rectangulaires, parallèles et espacées 38 ou 39, percées de trous en regard dans les deux branches d'une même chape, pour le passage de vis de fixation à un mur respectif. Les deux branches 38 ou 39 sont saillantes d'un même côté d'un fond de chape 40 ou 41. Les deux chapes 36 et 37 sont destinées à être disposées tête-bêche l'une au-dessus de l'autre et tournées l'une vers l'autre par leur fond 40 et 41, de sorte que les deux fonds de chape 40 et 41 peuvent être vissés l'un contre l'autre par une vis 40a, engagée dans une lumière transversale 40b traversant le fond de chape 40, et pouvant être engagée axialement dans des alésages 42 et 43 alignés dans lesdits fonds de chape 40 et 41, l'alésage 42 étant lisse et l'alésage 43 étant taraudé, de sorte que la vis 40a se visse dans l'alésage 43. Chaque chape 36 ou 37 est intégrée en insert dans une découpe, de forme correspondant à celle de son fond 38 ou 39, et aménagée dans la base ou le bord supérieur respectivement du mur supérieur 10 ou inférieur 5. Ainsi, la chape supérieure 36 a ses deux branches 38 destinées à chevaucher le pourtour de la découpe dans la base d'un mur tel que 10 de la figure 5a, à laquelle base cette chape 36 est fixée par des vis, (non représentées) traversant les paires de trous alignés 44 ménagés dans les deux branches 38 de cette chape 36, tandis que la chape inférieure 37 chevauche, par ses deux branches 39, le pourtour de la découpe dans le bord supérieur d'un mur tel que 5 de la figure 5a, auquel la chape 37 est fixée par des vis traversant les paires de trous alignés 45 ménagés dans les deux branches 39 de cette chape 37. Après montage, les vis de fixation des deux chapes 36 et 37 à leur mur respectif 10 ou 5 s'étendent sensiblement perpendiculairement à l'axe A de l'anneau 1, auquel la vis 40a de liaison des deux chapes 36 et 37 est sensiblement parallèle.

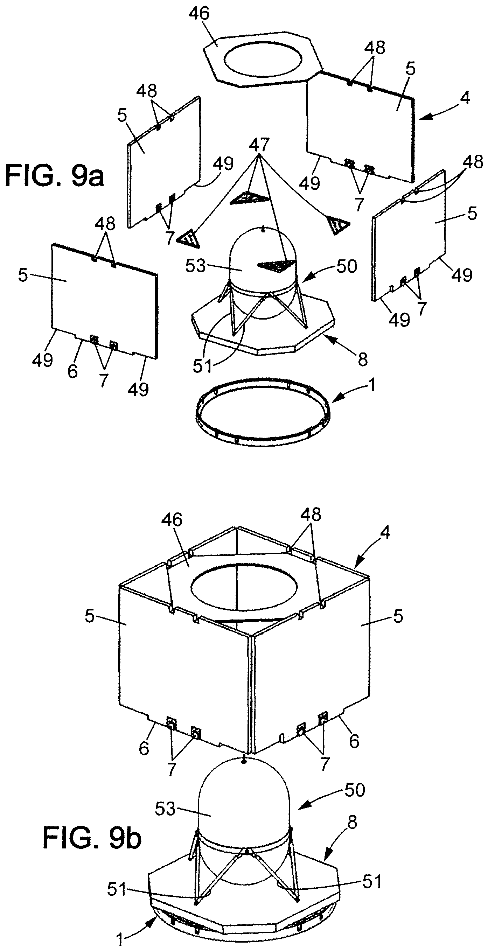

Les figures 9a à 9c représentent schématiquement trois étapes successives du procédé de mise en oeuvre d'un satellite selon l'invention, en complétant la description ci-dessus du procédé d'assemblage des figures 4a à 4c. En réalité, la figure 9a correspond, à elle seule, à deux étapes indépendantes, pouvant être simultanées ou non, de la mise en oeuvre du satellite.

La première étape, visualisée en partie supérieure et périphérique de la figure 9a, est l'assemblage d'une case 4, sensiblement cubique, à partir des éléments suivants :
- quatre murs primaires 5,
- un plateau annulaire supérieur 46, dont le périmètre est celui d'un carré coupé aux quatre sommets, c'est-à-dire d'un octogone irrégulier avec quatre grands côtés en alternance avec quatre petits côtés, ledit plateau présentant une ouverture centrale circulaire,
- quatre équerres d'angle 47, dont chacune est destinée à relier rigidement l'un à l'autre les coins inférieurs et adjacents de deux murs 5 voisins,
- un ensemble de ferrures et de vis de montage (non représentées) comprenant des ferrures d'angle pour relier rigidement deux à deux les murs 5 le long de deux bords adjacents verticaux, pour fixer également chaque équerre d'angle 47 aux deux côtés inférieurs présentant une découpe 49 correspondante dans la base des deux murs 5 que chaque équerre 47 relie l'un à l'autre, et aussi pour fixer le bord supérieur de chaque mur 5 à un petit côté du périmètre octogonal du plateau supérieur 46, grâce à deux liaisons quasi-ponctuelles telles que 7 et précédemment décrites, réalisées à l'aide de ferrures d'insert (non représentées) se logeant dans deux découpes 48 ménagées dans le bord supérieur de chaque mur 5, de sorte à obtenir la case 4 en partie supérieure de la figure 9b, rigidifiée aux quatre coins de sa base par les équerres 47 et au niveau des bords supérieurs des murs 5 par le plateau supérieur 46.

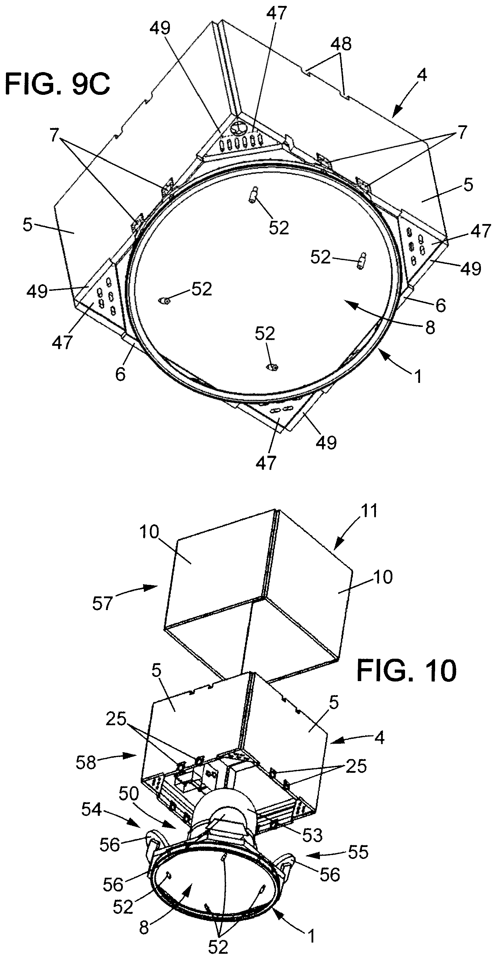

L'autre étape, représentée en partie inférieure et centrale de la figure 9a, correspond à l'assemblage d'un sous-ensemble de propulsion 50, supporté par des pieds 51, sur le plateau 8, sous lequel font saillie des propulseurs 52 (voir figure 9c) du sous-ensemble de propulsion 50, le plateau 8 étant, dans cet exemple, un plateau carré coupé aux quatre coins de sorte à présenter, lui aussi, un périmètre octogonal irrégulier à quatre grands côtés en alternance avec quatre petits côtés, à proximité de chacun desquels le plateau 8 est fixé en appui direct sur l'anneau 1 d'interface lanceur par une liaison linéaire sur un arc de cercle du plateau 1 recouvert par ce petit côté du plateau 8, comme représenté assemblé en partie inférieure de la figure 9b. En variante, chaque zone d'un petit côté du plateau 8 peut être liée directement à l'anneau 1 par deux liaisons quasi-ponctuelles telles que celles 7 qui permettent de lier chaque base 6 de chaque mur 5, au niveau des deux inserts 25 de cette base, à l'anneau 1, lors de l'assemblage de la case 4 de la partie supérieure de la figure 9b au module de propulsion de la partie inférieure de cette figure 9b, où ce module comprend l'anneau 1, le plateau 8 et le sous-ensemble de propulsion 50.

Avantageusement, ce module de propulsion peut être complété par un sous-ensemble de pilotage et contrôle d'orbite et d'attitude du satellite, qui comprend par exemple quatre roues de réaction 56 montées sur le plateau 8 au niveau de chacun des quatre petits côtés de ce dernier.

Grâce au montage « en parallèle » ou indépendamment l'un de l'autre, d'une part du module de propulsion, avec l'anneau 1, le plateau 8, et le sous-ensemble de propulsion 50 porté par ce plateau 8, et, d'autre part, le reste du satellite supporté par les murs 5 de la case 4, les essais de vibrations ou thermiques du satellite peuvent être réalisés sans module de propulsion assemblé à la case 4. De même, la campagne de tir peut s'effectuer sans module de propulsion, avant le couplage de ce dernier à la case 4 équipée sur le lanceur.

La préparation du module de propulsion indépendamment du reste du satellite permet de remplir le ou les réservoirs 53 d'ergol(s) du sous-ensemble de propulsion 50 chez le fournisseur d'ergol(s), ce qui permet d'éviter les risques liés au transfert d'ergol(s), dont certains, comme l'hydrazine, sont particulièrement dangereux. Après le remplissage du ou des réservoirs 53 du sous-ensemble de propulsion 50 avec un ou des ergol(s), le module de propulsion ainsi rempli est transporté puis stocké à l'écart du reste du satellite, à savoir la case 4 et les équipements qu'elle renferme, ainsi, éventuellement, qu'une case supplémentaire de charge utile et/ou une charge utile montée sur la case 4 et le plateau supérieur 46, et, en fin d'intégration, le module de propulsion vient refermer le satellite par la fixation de la case 4 par ses murs 5 sur l'anneau 1, pour obtenir un satellite prêt au lancement.

En cas de problème sur le satellite, ce dernier est ré-ouvert, sans autre démontage que les vis des huit liaisons quasi-ponctuelles 7 liant les bases des quatre murs 5 de la case 4 à l'anneau 1, de sorte à séparer le module de propulsion du reste du satellite, toujours sans transfert d'ergol(s), c'est-à-dire sans prise de risque autour du satellite. Une éventuelle vidange du réservoir 53 d'ergol ou de l'un au moins des réservoirs d'ergol peut ensuite être effectuée sur le module de propulsion séparé du reste du satellite.

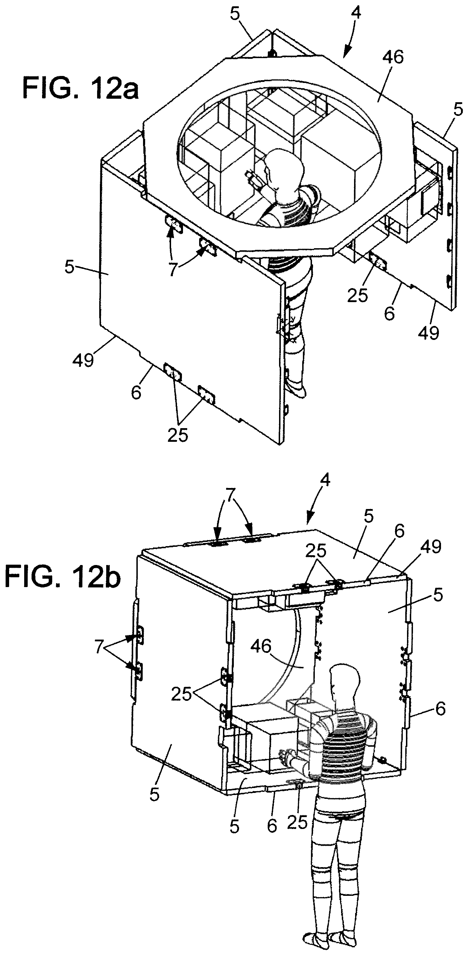

Avant le montage du module de propulsion, tel que séparément assemblé, monté sur le plateau 8, rempli d'ergol(s), testé puis certifié et représenté en partie basse sur la figure 9b, sur la case 4 telle qu'assemblée en partie haute de la figure 9b, l'intégration dans la case 4 de tous les équipements qu'elle doit contenir, sans démontage d'aucun mur 5 ou panneau constitutif d'un mur 5, est permis du fait de l'ouverture de la base de la case 4, comme cela est représenté sur les figures 12a et 12b.

Sur la figure 12a, la case 4 (dont un mur 5 n'est pas représenté pour plus de clarté) du satellite est maintenue verticalement par des moyens de levage non représentés, et de telle sorte qu'un opérateur puisse se tenir debout dans la case 4, accessible par sa base ouverte, et puisse ainsi procéder à l'intégration totale dans la case 4 des équipements que cette dernière doit recevoir. En variante, comme représenté sur la figure 12b, la case 4 peut être basculée sur un côté, constitué par un mur 5, sur un support ou par des moyens de levage non représentés, de sorte qu'un opérateur, debout à côté de la case 4, puisse accéder à l'intérieur de cette dernière soit par la base ouverte de cette case 4, soit par l'ouverture centrale du plateau supérieur de raidissement 46, de sorte à intégrer les équipements dans cette case 4.

La figure 10 représente en perspective éclatée un satellite, dont la structure correspond sensiblement à celle de la figure 5a sans charge utile optique 13 au-dessus d'une case 11 de charge utile assemblée et montée en second étage au-dessus d'une case 4 de servitudes assemblée et montée en premier étage sur l'anneau 1 d'interface lanceur d'un module de propulsion séparément et préalablement monté, testé et certifié comme expliqué ci-dessus.

Dans cet exemple, le module de propulsion 54 est du type dont le plateau 8 fixé directement sur l'anneau 1 supporte non seulement un module de propulsion 50, tel que préalablement décrit, avec un réservoir d'ergol(s) 53 de forme cylindro-sphérique (délimité extérieurement par un tronc de cylindre de section circulaire entre deux hémisphères), avec des propulseurs 52 en saillie sous le plateau 8, mais également un sous-ensemble de pilotage et contrôle d'orbite et d'attitude 55, dont on ne voit que trois roues de réaction 56 montés sensiblement le long de trois petits côtés du plateau 8 octogonal, comme décrit en référence aux figures 9a et 9c. La case de charge utile 11 et la case de servitudes 4 peuvent chacune, indépendamment de l'autre, être équipée des équipements qu'elle doit recevoir, de sorte à réaliser un module de charge utile 57 et un module de servitudes 58 respectivement, et ces deux modules 57 et 58, ainsi que le module de propulsion 54 peuvent être intégrés et testés séparément, et les couplages sont réduits à huit vis non ajustées entre deux modules adjacents, puisque chacun des murs 5 de la case 4 se fixe sur l'anneau 1 par deux liaisons quasi-ponctuelles 7, dont on voit les ferrures 25 sur la figure 10, et puisque, de la même manière, chacun des murs 10 de la case de charge utile 11 est fixé par sa base au bord supérieur d'un mur 5 correspondant de la case de servitudes 4 par deux liaisons quasi-ponctuelles analogues.

Ainsi, le module de servitudes 58 se reprend directement sur l'anneau 1 d'interface lanceur, et n'interfère pas avec le plateau 8 du module de propulsion 54, et le module de charge utile 57 se reprend directement sur le module de servitudes 58.

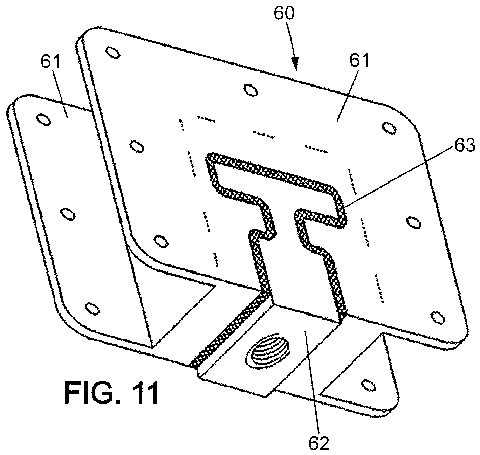

En variante, pour assurer un découplage entre les murs 5 du module de servitude 58 et le module de propulsion 54, vis-à-vis de chocs pouvant provenir du lanceur, avant le largage du satellite, et de vibrations pouvant provenir du module de propulsion 54, ou du module de pilotage 55, après largage du satellite, la liaison entre chacun des murs 5 de la case 4 et l'anneau 1 peut être assurée par l'intermédiaire d'au moins un isolateur de chocs et/ou vibrations, tel que représenté, par exemple, sur la figure 11, qui peut être intégré ou associé à une liaison quasi-ponctuelle.

A cet effet, l'isolateur ou atténuateur 60 de chocs et vibrations de la figure 11 est analogue à une chape d'insert 25 et comprend deux branches 61, analogues aux branches 26 de la chape 25, et destinées à être fixées au pourtour d'une découpe dans la base 6 d'un mur d'une case telle que 4, et un fond de chape 62 analogue au fond de chape 28 et destiné à recevoir une vis axiale (sensiblement parallèle à l'axe de l'anneau 1) de la ou des deux liaisons quasi-ponctuelles telles que 7, et une couche d'un matériau élastomère viscoélastique 63 est interposée entre les deux branches 61 et le fond de chape 62 pour assurer la fonction d'isolation et d'amortissement des chocs et vibrations.

Ainsi, des isolateurs ou atténuateurs 60 peuvent être placés entre le module de propulsion 54 et le module de servitudes 58 pour filtrer les micro-vibrations en vol et/ou amortir les chocs pendant le tir du lanceur.

## Revendications

1. Satellite ayant une structure comprenant :
- un anneau (1) circulaire d'interface lanceur, destiné à être solidarisé amoviblement à un anneau analogue solidaire d'un lanceur du satellite, et
- au moins deux murs (5) plans porte-équipements, appelés murs primaires s'étendant sensiblement parallèlement à l'axe (A) dudit anneau (1) d'interface et reliés rigidement entre eux et audit anneau (1) d'interface,
**caractérisé en ce que** chaque mur primaire (5) est en appui direct sur ledit anneau (1) d'interface par une base (6) dudit mur (5) qui est tournée vers ledit anneau (1) d'interface, et chaque mur (5) primaire est fixé rigidement et directement audit anneau (1) d'interface par au moins une liaison quasi-ponctuelle (7) au niveau d'au moins un point ou une zone de tangence ou de croisement de ladite base (6) dudit mur (5) et dudit anneau (1) d'interface.

2. Satellite selon la revendication 1, **caractérisé en ce que** sa structure comprend au moins trois murs (5) plans, fixés rigidement et adjacents deux à deux en formant une case (4) prismatique, d'axe sensiblement parallèle à l'axe (A) dudit anneau (1) d'interface et dont la section transversale, perpendiculairement audit axe (A) dudit anneau (1), est polygonale, et de préférence de forme triangulaire, carrée ou rectangulaire, trapézoïdale, pentagonale ou hexagonale.

3. Satellite selon l'une quelconque des revendications 1 et 2, **caractérisé en ce que** sa structure comprend également un plateau (8) porte-équipements, disposé entre lesdits murs (5), sans contact avec eux, et en appui direct sur ledit anneau (1) d'interface, sur lequel ledit plateau (8) est rigidement et directement fixé à plat, indépendamment de la fixation (7) desdits murs (5) audit anneau d'interface (1).

4. Satellite selon la revendication 3, telle que rattachée à la revendication 2, **caractérisé en ce que** ledit plateau (8) est fixé sur l'anneau d'interface (1), par des liaisons (9) également quasi-ponctuelles ou linéaires, sur des arcs de l'anneau d'interface (1) laissés libres par les fixations (7) des murs primaires (5) sur ledit anneau (1).

5. Satellite selon l'une quelconque des revendications 3 et 4, **caractérisé en ce que** ledit plateau (8) supporte un sous-ensemble de propulsion (50) et/ou un sous-ensemble (55) de pilotage et contrôle d'orbite et/ou d'attitude du satellite.

6. Satellite selon l'une quelconque des revendications 1 à 5, **caractérisé en ce que** sa structure comporte également d'autres murs plans dits secondaires (19, 20, 21), sensiblement parallèles ou perpendiculaires aux murs primaires (5), fixés rigidement entre eux et/ou aux murs primaires (5), pour former de nouvelles cases et augmenter la surface et le volume disponibles pour le logement d'équipements.

7. Satellite selon l'une quelconque des revendications 1 à 6, **caractérisé en ce que** sa structure comporte également d'autres murs plans (10), sensiblement parallèles à l'axe (A) dudit anneau (1) d'interface, fixés rigidement entre eux et chacun par sa base sur une extrémité de l'un desdits murs primaires (5), ladite extrémité étant tournée à l'opposé dudit anneau (1), de sorte que lesdits autres murs (10) forment une case (11), de préférence prismatique d'axe parallèle à l'axe (A) dudit anneau (1) d'interface, et lesdits autres murs étant fixés par des liaisons quasi-ponctuelles (7) au-dessus desdits murs primaires (5).

8. Satellite selon l'une quelconque des revendications 1 à 6, **caractérisé en ce que** l'extrémité des murs primaires (5) qui est tournée du côté opposé audit anneau (1) d'interface lanceur est fixée directement, par au moins une liaison quasi-ponctuelle (7) par mur primaire (5), sur un anneau (16) circulaire d'interface satellite, de préférence de même diamètre que ledit anneau (1) d'interface lanceur, et lui-même destiné à être solidarisé amoviblement à un second anneau (17) d'interface satellite d'un autre satellite (18), de préférence de structure analogue audit satellite selon l'une quelconque des revendications 1 à 6, et empilable sur ce dernier pour un lancement groupé.

9. Satellite selon l'une quelconque des revendications 1 à 8, **caractérisé en ce que** au moins une liaison quasi-ponctuelle (7) reliant ledit anneau d'interface lanceur (1) ou d'interface satellite (16, 17), le cas échéant, à un mur (5) ou à un plateau porte-équipements (8) ou de rigidification (12) et/ou de support de charge utile comprend au moins ou est associée à un isolateur de chocs et/ou vibrations (60) .

10. Satellite selon l'une quelconque des revendications 3 à 5 et 6 à 9 telle que rattachée à la revendication 3 **caractérisé en ce que** l'ensemble composé dudit plateau (8) fixé sur l'anneau (1) d'interface lanceur, forme un module démontable (54) sans démontage d'aucune autre partie du satellite, le démontage dudit ensemble permettant l'ouverture du satellite pour autoriser les manipulations internes.

11. Procédé de mise en oeuvre d'un satellite selon la revendication 3, **caractérisé en ce que**, d'une part, on assemble au moins une case (4) de murs primaires (5) sans la fixer à l'anneau (1) d'interface lanceur, et, d'autre part, on assemble le plateau (8) porte-équipements audit anneau (1) en un ensemble formant un module démontable (54) sans le fixer à ladite case (4), on intègre des équipements dans ladite au moins une case (4) et sur ledit module démontable (54), puis on teste, et certifie ladite au moins une case (4) équipée et ledit module démontable (54) équipé, et on exécute l'une au moins des opérations d'intégration, de test, et de certification séparément sur ladite au moins une case (4) et ledit module démontable (54).

12. Procédé selon la revendication 11, **caractérisé en ce que** l'opération d'intégration d'équipements dans au moins une case (4) de murs primaires (5) s'effectue par l'ouverture à la base de ladite case (4), avant montage ou après démontage dudit module démontable (54) respectivement sur ou de ladite case (4), sans démontage d'aucun autre mur ou panneau porteur d'équipements.

13. Procédé selon l'une quelconque des revendications 11 et 12, mis en oeuvre sur un satellite dont le plateau (8) porte-équipements du module démontable (54) est équipé d'un sous-ensemble de propulsion (50) comprenant au moins un réservoir d'ergol(s) (53), et constituant un module de propulsion (54), **caractérisé en ce que** ledit au moins un réservoir (53) est rempli d'ergol(s) et/ou vidangé de l'ergol qu'il contient respectivement avant montage et/ou après démontage du module de propulsion (54) et de ladite au moins une case (4) équipée et, de préférence, du reste du satellite.

## Patentansprüche

1. Satellit mit einer Struktur, umfassend:
- einen kreisförmigen Starterschnittstellenring (1), der dazu bestimmt ist, abnehmbar an einem ähnlichen Ring befestigt zu werden, der an einem Satellitenstarter befestigt ist, und
- mindestens zwei ebene Ausrüstungsträgerwände (5), die als Primärwände bezeichnet werden und sich im Wesentlichen parallel zur Achse (A) des Schnittstellenrings (1) erstrecken und untereinander sowie mit dem Schnittstellenring (1) fest verbunden sind,
**dadurch gekennzeichnet, dass** jede Primärwand (5) direkt auf dem Schnittstellenring (1) durch eine Basis (6) der Wand (5) abgestützt ist, die dem Schnittstellenring (1) zugewandt ist, und jede Primärwand (5) starr und direkt an dem Schnittstellenring (1) durch mindestens eine quasi-punktuelle Verbindung (7) an mindestens einem Punkt oder einem Bereich der Tangens oder Kreuzung der Basis (6) der Wand (5) und des Schnittstellenrings (1) befestigt ist.

2. Satellit nach Anspruch 1, **dadurch gekennzeichnet, dass** seine Struktur mindestens drei ebene Wände (5) umfasst, die starr befestigt und paarweise benachbart sind, wobei sie einen Prismenkasten (4) bilden, dessen Achse im Wesentlichen parallel zur Achse (A) des Schnittstellenrings (1) verläuft und dessen senkrecht zur Achse (A) des Rings (1) stehender Querschnitt polygonal und vorzugsweise dreieckig, quadratisch oder rechteckig, trapezförmig, fünfeckig oder sechseckig ist.

3. Satellit nach einem der Ansprüche 1 und 2, **dadurch gekennzeichnet, dass** seine Struktur ferner eine Ausrüstungsträgerplatte (8) umfasst, die zwischen den Wänden (5) ohne Kontakt mit diesen angeordnet und direkt auf dem Schnittstellenring (1) abgestützt ist, an dem die Platte (8) unabhängig von der Befestigung (7) der Wände (5) an dem Schnittstellenring (1) starr und direkt flach befestigt ist.

4. Satellit nach Anspruch 3, sofern abhängig von Anspruch 2, **dadurch gekennzeichnet, dass** die Platte (8) an dem Schnittstellenring (1) durch Verbindungen (9), die ebenfalls quasipunktuell oder linear sind, an Bögen des Schnittstellenrings (1) befestigt ist, die von den Befestigungen (7) der Primärwände (5) an dem Ring (1) frei gelassen sind.

5. Satellit nach einem der Ansprüche 3 und 4, **dadurch gekennzeichnet, dass** die Platte (8) eine Antriebsbaugruppe (50) und/oder eine Baugruppe (55) zum Steuern und Regeln der Umlaufbahn und/oder der Lage des Satelliten trägt.

6. Satellit nach einem der Ansprüche 1 bis 5, **dadurch gekennzeichnet, dass** seine Struktur auch andere sogenannte sekundäre ebene Wände (19, 20, 21) umfasst, die im Wesentlichen parallel oder senkrecht zu den Primärwänden (5) verlaufen und untereinander und/oder mit den Primärwänden (5) fest verbunden sind, um neue Kästen zu bilden und die Fläche und das Volumen zu vergrößern, die zur Unterbringung von Ausrüstungen verfügbar sind.

7. Satellit nach einem der Ansprüche 1 bis 6, **dadurch gekennzeichnet, dass** seine Struktur auch andere ebene Wände (10) umfasst, die im Wesentlichen parallel zur Achse (A) des Schnittstellenrings (1) verlaufen und untereinander sowie jeweils durch ihre Basis an einem Ende einer der Primärwände (5) starr befestigt sind, wobei das Ende gegenüber dem Ring (1) gedreht ist, sodass die anderen Wände (10) einen Kasten (11) bilden, vorzugsweise prismatisch und achsenparallel zu der Achse (A) des Schnittstellenrings (1), und die anderen Wände durch quasi-punktuelle Verbindungen (7) über den Primärwänden (5) befestigt sind.

8. Satellit nach einem der Ansprüche 1 bis 6, **dadurch gekennzeichnet, dass** das Ende der Primärwände (5), das zu der dem Starter-Schnittstellenring (1) gegenüberliegenden Seite gedreht ist, durch mindestens eine quasi-punktuelle Verbindung (7) pro Primärwand (5) direkt an einem kreisförmigen Satelliten-Schnittstellenring (16) befestigt ist, vorzugsweise mit dem gleichen Durchmesser wie der Starterschnittstellenring (1), und selbst dazu bestimmt ist, lösbar an einem zweiten Satelliten-Schnittstellenring (17) eines anderen Satelliten (18) befestigt zu werden, vorzugsweise mit einer ähnlichen Struktur wie der Satellit nach einem der Ansprüche 1 bis 6, und auf diesem für einen Massenstart stapelbar ist.

9. Satellit nach einem der Ansprüche 1 bis 8, **dadurch gekennzeichnet, dass** mindestens eine quasi-punktuelle Verbindung (7), die den Starter-Schnittstellenring (1) oder den Satelliten-Schnittstellenring (16, 17) gegebenenfalls mit einer Wand (5) oder einer Platte zum Tragen von Ausrüstungen (8) oder zur Versteifung (12) und/oder für Nutzlast verbindet, mindestens einen Stoß- und/oder Schwingungsisolator (60) umfasst oder mit einem solchen verbunden ist.

10. Satellit nach einem der Ansprüche 3 bis 5 und 6 bis 9, sofern abhängig von Anspruch 3, **dadurch gekennzeichnet, dass** die aus der am Starter-Schnittstellenring (1) befestigten Platte (8) bestehende Anordnung ein Modul (54) bildet, das abnehmbar ist ohne irgendeinen anderen Teil des Satelliten zu demontieren, wobei die Demontage der Anordnung das Öffnen des Satelliten ermöglicht, um interne Eingriffe zu gestatten.

11. Anwendungsverfahren eines Satelliten nach Anspruch 3, **dadurch gekennzeichnet, dass** einerseits mindestens ein Kasten (4) von Primärwänden (5) zusammengesetzt wird, ohne ihn am Starter- Schnittstellenring (1) zu befestigen, und andererseits die Ausrüstungsträgerplatte (8) an diesem Ring (1) in einer Anordnung montiert wird, die ein abnehmbares Modul (54) bildet, ohne sie an diesem Kasten (4) zu befestigen, Ausrüstung in den mindestens einen Kasten (4) und auf dem abnehmbaren Modul (54) integriert wird, dann der mindestens eine ausgerüstete Kasten (4) und das ausgerüstete abnehmbare Modul (54) geprüft und zertifiziert werden und mindestens eine der Integrations-, Test- und Zertifizierungsoperationen separat an dem mindestens einen Kasten (4) und dem abnehmbaren Modul (54) ausgeführt wird.

12. Verfahren nach Anspruch 11, **dadurch gekennzeichnet, dass** der Vorgang der Integration von Ausrüstung in mindestens einen Kasten (4) aus Primärwänden (5) durch Öffnen an der Basis des Kastens (4) vor der Montage bzw. nach der Demontage des abnehmbaren Moduls (54) an oder von dem Kasten (4) ohne Demontage einer anderen Wand oder Ausrüstungsträgerplatte durchgeführt wird.

13. Verfahren nach einem der Ansprüche 11 und 12, das an einem Satelliten angewandt wird, dessen Ausrüstungsträgerplatte (8) des abnehmbaren Moduls (54) mit einer Antriebsbaugruppe (50) ausgestattet ist, die mindestens einen Treibstofftank (53) umfasst und ein Antriebsmodul (54) bildet, **dadurch gekennzeichnet, dass** der mindestens eine Tank (53) mit Treibstoff gefüllt und/oder von dem Treibstoff entleert ist, den er vor der Montage bzw. nach der Demontage des Antriebsmoduls (54) und des mindestens einen ausgerüsteten Kastens (4) und vorzugsweise des restlichen Satelliten enthält.

## Claims

1. Satellite having a structure comprising:
- a circular launcher interface ring (1), intended to be removably secured to an analogous ring secured to a satellite launcher, and
- at least two planar equipment-holding walls (5) referred to as primary walls, extending substantially parallel to the axis (A) of said interface ring (1) and rigidly connected to each other and to said interface ring (1),
**characterized in that** each primary wall (5) bears directly on said interface ring (1) by a base (6) of said wall (5), said base facing said interface ring (1), and each primary wall (5) is rigidly and directly attached to said interface ring (1) by at least one somewhat point-by-point connection (7) to at least one point or area of tangency or of intersection between said base (6) of said wall (5) and said interface ring (1).

2. Satellite according to claim 1, **characterized in that** its structure comprises at least three planar walls (5), rigidly attached and adjacent two by two to form a prismatic compartment (4), having an axis substantially parallel to the axis (A) of said interface ring (1) and having a cross-section, perpendicular to said axis (A) of said ring (1), that is polygonal and preferably triangular, square or rectangular, trapezoidal, pentagonal, or hexagonal in shape.

3. Satellite according to either of claims 1 or 2, **characterized in that** its structure also comprises an equipment-holding platform (8) arranged between said walls (5) but without any contact with them, and directly bearing on said interface ring (1), to which said platform (8) is rigidly and directly attached so as to be planar, independently of the attachment (7) of said walls (5) to said interface ring (1).

4. Satellite according to claim 3 as related to claim 2, **characterized in that** said platform (8) is attached to the interface ring (1) by connections (9) that are also somewhat point-by-point or linear, on arcs of the interface ring (1) left free by the attachments (7) between the primary walls (5) and said ring (1).

5. Satellite according to either of claims 3 and 4, **characterized in that** said platform (8) supports a propulsion sub-assembly (50) and/or a sub-assembly (55) for the piloting and orbit and/or attitude control (55) of the satellite.

6. Satellite according to any one of claims 1 to 5, **characterized in that** its structure also comprises other planar walls referred to as secondary walls (19, 20, 21), substantially parallel or perpendicular to the primary walls (5), rigidly attached to each other and/or to the primary walls (5) to form new compartments and increase the surface area and volume available to house equipment.

7. Satellite according to any one of claims 1 to 6, **characterized in that** its structure also comprises other planar walls (10), substantially parallel to the axis (A) of said interface ring (1), rigidly attached to each other and each one attached by its base to an end of one of said primary walls (5), said end facing away from said ring (1), such that said other walls (10) form a compartment (11), preferably prismatic with its axis parallel to the axis (A) of said interface ring (1), and said other walls being attached by somewhat point-by-point connections (7) above said primary walls (5).

8. Satellite according to any one of claims 1 to 6, **characterized in that** the end of the primary walls (5) which faces away from said launcher interface ring (1) is attached directly, by at least one somewhat point-by-point connection (7) per primary wall (5), to a circular satellite interface ring (16), preferably of the same diameter as said launcher interface ring (1), which is itself intended to be removably secured to a second satellite interface ring (17) of another satellite (18), preferably of a structure analogous to said satellite according to any one of claims 1 to 6, and stackable onto said satellite for a group launch.

9. Satellite according to any one of claims 1 to 8, **characterized in that** at least one somewhat point-by-point connection (7) attaching said launcher interface ring (1) or satellite interface ring (16, 17), as applicable, to a wall (5) or to a platform for holding equipment (8) or for stiffening (12) and/or for payload support, comprises or is at least associated with a shock and/or vibration isolator (60) .

10. Satellite according to any one of claims 3 to 5 and 6 to 9 as related to claim 3, **characterized in that** the assembly consisting of said platform (8) attached to the launcher interface ring (1), forms a module (54) that can be removed without disassembling any other part of the satellite, the disassembly of said assembly making it possible to open up the satellite to perform actions inside.

11. Method for implementing a satellite according to claim 3, **characterized in that** at least one compartment (4) of primary walls (5) is assembled without attaching it to the launcher interface ring (1), and the equipment-holding platform (8) is assembled to said ring (1) as an assembly forming a removable module (54) without attaching it to said compartment (4); equipment is integrated into said at least one compartment (4) and onto said removable module (54), then testing and certification is conducted on said at least one compartment (4), now equipped, and said removable module (54), now equipped, and at least one of the operations of integration, testing, and certification is performed separately on said at least one compartment (4) and said removable module (54).

12. Method according to claim 11, **characterized in that** the operation of integrating equipment into at least one compartment (4) of primary walls (5) is performed through the opening at the base of said compartment (4), before assembly or after disassembly of said removable module (54) respectively onto or from said compartment (4), without disassembly of any other equipment-holding wall or panel.

13. Method according to either of claims 11 and 12, implemented in a satellite in which the equipment-holding platform (8) of the removable module (54) is equipped with a propulsion sub-assembly (50) comprising at least one tank of propellant (53), forming a propulsion module (54), **characterized in that** said at least one tank (53) is filled with propellant and/or emptied of the propellant it contains respectively before assembly and/or after disassembly of the propulsion module (54) and of said at least one equipped compartment (4) and, preferably, of the rest of the satellite.
